Europäisches Patentamt

European Patent Office

Office européen des brevets

(11) Publication number: **0 082 831**
A2

# (12) EUROPEAN PATENT APPLICATION

(21) Application number: **82870025.2**

(22) Date of filing: **18.05.82**

(51) Int. Cl.³: **B 01 J 23/22**
**C 01 B 17/79, B 01 J 35/02**

(30) Priority: **24.11.81 BE 206645**

(43) Date of publication of application:
**29.06.83 Bulletin 83/26**

(84) Designated Contracting States:
**DE FR GB IT**

(71) Applicant: "Catalysts and Chemicals Europe"
Place du Champ de Mars, 2
B-1050 Bruxelles(BE)

(72) Inventor: Schurmans, Jacques Paul
rue Théo De Cuyper 157
B-1200 Brussels(BE)

(74) Representative: Schmitz, Yvon et al,
Bureau Gevers S.A. 7, rue de Livourne Bte 1
B-1050 Bruxelles(BE)

(54) Vanadium pentoxide catalysts and use thereof.

(57) Vanadium pentoxide catalysts consisting of solid or hollow cylindrical or prismatic particles whose longitudinal cylindrical or flat surfaces are furnished with grooves (1) whose spacing, depth and width are such that, if compared to a non-grooved cylinder or prism of identical height and external dimension, then the gas/solid surface is increased while still maintaining an adequate mechanical strength, and use thereof.

FIG. 3

<u>"Vanadium pentoxide catalysts and use thereof"</u>.

The present invention concerns an improved form of the catalyst used in the conversion of $SO_2$ into $SO_3$ particularly as applied in the manufacture of sulphuric acid.

This type of catalyst is made up essentially of the following elements : vanadium, potassium, sodium, silicon, oxygen, plus various impurities plus also sulphur in the majority of cases.

Three elements are present in the form of silica and complex compounds such as potassium pyrosulphate, complex sulphates of vanadium and potassium, sodium sulphate, etc.

Generally, these catalysts are presented in the form of cylindrical rods, but also as spheres, cylindrical tablets or even cylindrical rings.

In general, two types of manufacturing process are employed for this catalyst .

In the first process which is also the most widely used, the majority  of the essential constituents of the catalyst are mixed before the operation in which the catalyst particles are shaped.

The second method of manufacture is less often used because it is generally more costly; nevertheless it can present advantages as far as the activity of the catalyst is concerned.  It consists of first shaping an inert support which, after thermal treatment, is dipped in a solution which contains the adive elements of the catalyst.

In recent years, special attention has been given to the dimensions and shapes of catalysts. The dimensions and the shape have in fact considerable effect on the pressure drop in the catalytic reactor, on the activity of the catalyst, ont its mechanical strength, and the date of fouling of the catalyst beds when solid particles are entrained by the gas into the reactors.

The following characteristics are the main ones required of a catalyst in the conversion of $SO_2$ into $SO_3$.

1. A high activity at low temperature. This property allows a reduction of the operating temperatures and an improvement in the conditions of chemical equilibrium with consequential improvement of the conversion of $SO_2$ into $SO_3$. This property is a function of the chemical composition, the method of manufacture and the microscopic structure of the catalyst, as well as various physical parameters (porosity, active surface area, etc....).

2. A high activity at the normal operating temperatures of the catalyst (350-650°C). This property allows a reduction in the volumes of catalyst necessary to obtain a given degree of conversion in the chemical reaction, or alternatively, for a given volume of catalyst to improve the degree of conversion of $SO_2$ into $SO_3$. The rate of external diffusion of the reacting gas being one of the factors which limit the rate of the catalytic reaction it is advantageous, for a catalyst having a given chemical composition, structure and physical properties, to increase the area of contact surface between the reacting gas and the catalyst. A classical method of increasing this contact surface is to use smaller catalyst particles, but this causes increased pressure drop in catalyst beds.

3. Pressure drop in catalyst beds :

There is a considerable advantage in using catalyst particles which cause low pressure drop in the catalyst beds. In a reactor of given dimensions a lower pressure drop leads to a substantial reduction in the costs of the energy consumed in compressing the gas; or on the other hand, for a given pressure drop in a catalyst bed, catalyst particles which present a reduced resistance to the passage of the gas will allow the use of reactors with smaller diameter; which are therefore less expensive. Only the shape and dimensions of the catalyst particles allow action in this field. An increase in the dimensions of the catalyst particles allows a reduction in the pressure drop, but at the expense of the gas/catalyst contact surface, and consequently, at the expense of the activity of the catalyst bed.

4. Rate of fouling of catalyst beds :

The gases treated in catalyst beds normally contain dust, which is present in quantities varying according to the origins of the gas and the pretreatment which it has received. This leads, more or less rapidly, to the progressive fouling of the catalyst beds and particularly of the bed which is in first contact with the gas. This phenomenon in turn leads to increases in the pressure drop and to losses in the activity of the catalyst bed which can become prohibitive and necessitate periodic shut-downs of the production unit. During these shut-downs the catalyst must be discharged and screened and in addition the losses on screening have to be compensated for by adding new catalyst. These stoppages represent large production losses and therefore increase the operating costs.

The presence of deposits in the upper part of the first bed of catalyst is widely explained by a phenomenon whereby the dust adheres to the catalyst surface which includes chemical compounds having a certain viscosity at the elevated temperatures of operation which exist in the first catalyst bed.

For a catalyst having a given chemical composition and microstructure , the shape and dimensions of the catalyst particles influence greatly the rate of fouling.

5. Mechanical strength :
Good mechanical strength in the particles of the catalyst, and in particular a good resistance to attrition permits longer operating periods for the catalyst bed and in consequence reduces the number of stoppages for screening and reduces also the catalyst losses on screening.

As enunciated in the preceding description, the shape and dimensions of the particles of a catalyst having a given chemical composition, structure, and physical characteristics, have an important influence on the activity, the pressure drop, and and the rate of fouling of the catalyst.

The present invention concerns a new shape of catalyst which offers an increased activity at normal operating temperatures, which causes low pressure drops, and which permits a significant reduction in the consequences of fouling in catalyst beds, while still maintaining a good mechanical strength.

The present invention concerns a $V_2O_5$ catalyst for the conversion of $SO_2$ into $SO_3$, this catalyst being characterised by the fact that it is in the form of cylindrical or prismatic rods or rings grooved on their external surface, these grooves having a width, a depth, a spacing, a direction and a shape determined so as to optimise the characteristics of activity, pressure drop and rate of fouling of the catalyst bed, while still conserving a satisfactory mechanical strength in the catalyst particle.

Figures 1 and 2 illustrate as examples various catalyst particles according to the present invention:

Figure 1 (a) – Grooved cylinder having five grooves with flat side-walls parallel to the axis of the cylinder.

Figure 1 (b) – Ring having grooves on outer and/or inner lateral surfaces parallel to the axis of the cylinder.

Figure 2 – Square prism having five grooves with semi-circular walls, and parallel to the axis of the prism.

The grooves can equally be other than parallel to the axis of the cylinder or prism or ring .

For preference, and for consideration of ease of manufacture and of mechanical strength of the catalyst, one would use cylinders with grooves parallel to the cylinder axis and one would avoid sharp edges on the grooves.

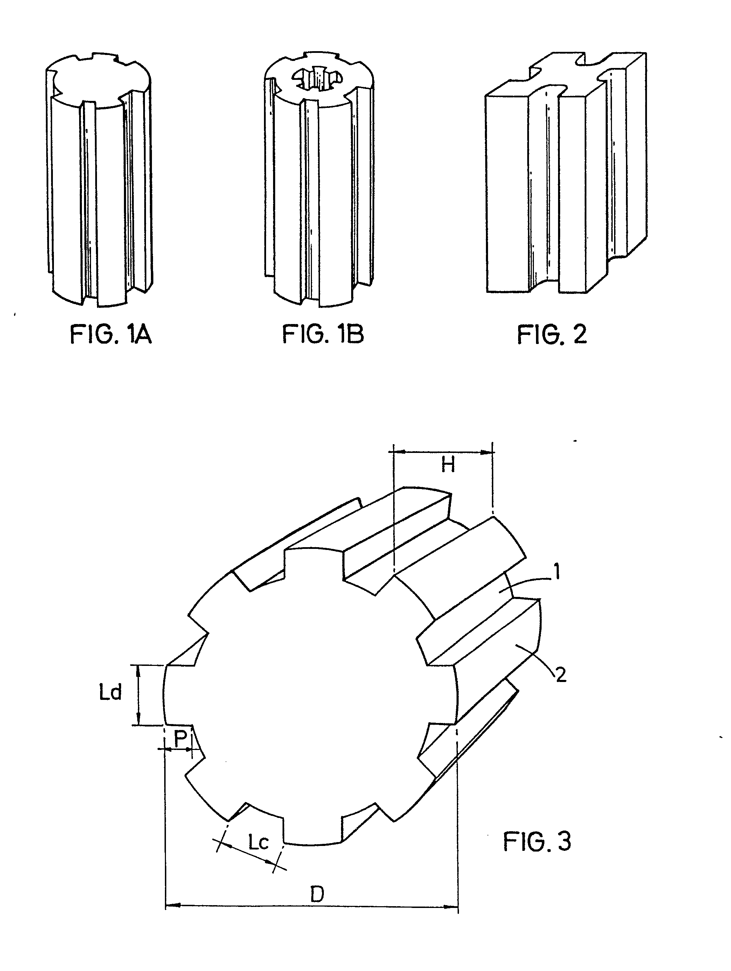

These considerations have led to a preferential definition of the dimensions and shape of the catalyst particle as follows (see figure 3).

1° Shape : grooved cylinder with grooves parallel to the axis of the cylinder.

2° External diameter of the cylinder D : the external diameter of the cylinder will be comprised between 3 and 20 mm and for preference between 5.5 - 8.5 mm.

3° Number of grooves N :
this shall be generally between 3 and 18 but will preferentially be 5, 6, or 7.

4° Height of the cylinders H :
the ratio height/diameter of the catalyst particle can vary in large proportions, from 0.3 to 3.0 and generally from 0.5 to 2.0. The value of this ratio can vary from one catalyst particle to the other, depending on the method of production of the catalyst particles.

5° For reasons of ease of production the side walls of the teeth will be for preference parallel : the corners of the grooves and the teeth will be either sharp or rounded.

6° Depth of the grooves (1) P :
the depth must be limited to conserve an adequate mechanical strength in the catalyst particle.  In general, the ratio depth of teeth P/external diameter D will be comprised between 0.10 and 0.30 and for preference between 0.13 and 0.20.

7° Width of teeth (2) Ld :

this is equally dependent on considerations of mechanical strength.

In general, the ratio Ld/D will be comprised between 0.05 and 0.5 and for preference between 0.21 and 0.30.

8° Distance between two consecutive teeth (2) $L_c$ :

this distance is fixed so as to prevent the interpenetration of the catalyst particles or to reduce the possibility of interpenetration. Normally the ratio $L_c$/Ld will therefore be between 0.3 and 1.05 and for preference between 0.8 and 1.05.

The advantages of the catalysts which are the object of the present invention are demonstrated by the following examples :

Example 1

The following are introduced successively into a mixer :

- 10 kg of Kieselguhr
- 7 litres of an aqueous solution at a temperature of 95°C and consisting of 450 gr/l of $K_2CO_3$ and 150 gr/L of $V_2O_5$.
- 3 kg of 98% $H_2SO_4$
- 1.5 kg of an organic constituent.

After mixing for one hour, the product is cooled for 20 to 24 hours before being formed in one case into cylindrical rods of classic type, and in the other case into the form of grooved cylinders according to the invention, but having the same external dimensions. The average dimensions of the catalyst particles in example 1 are given in figure 3A.

The two types of catalyst particles are dried, then calcined at 500°C for 4 hours; given the similarity in the production process, they present the same internal characteristics (chemical composition by weight, active surface area, porosity and internal structure). As regards the geometric characteristics of the two forms of catalyst, these are compared in the following table.

| Type | Fig. 4a classic | Fig. 4b grooved |
|---|---|---|
| Average external diameter mm | 6 | 6 |
| Average height mm | 9 | 9 |
| Contact surface ($cm^2$/litre) | 5569 | 6151 |
| % Void space, in a packed bed composed of the catalyst particles | 37 | 58 |

The two forms of catalyst are then compared from the point of view of the pressure drop and from the point of view of the activity of the catalyst.

1° Pressure drop :

The tests are carried out in the following manner : A volume of approximately 5 litres of catalyst is introduced into a glass tube having an internal diameter of 8.95 cm. A flow of air is circulated from top to bottom under a pressure close to atmospheric and the pressure drop is measured for different flow rates of air. After substracting the pressure drops measured in the tube without catalyst, the pressure drop coefficient is determined according to the following formula :

$$PF : \frac{delta\ P \times M \times P}{0.5 \times 10^{-9} \times G^{1.9} \times L \times T}$$

where PF   : pressure drop coefficient, $mm^{-1.1}$

Delta p: measured pressure drop in bars (in fact the difference between the measurements with and without catalyst in the tube)

M    : molecular weight of aire, Kg

P    : absolute pressure at inlet, bars

G    : mass flow in Kg/hour, $m^2$

L    : height of the bed in m

T    : average temperature of the catalyst bed in °K.

The average results obtained in these tests for the value PF (in $mm^{-1.1}$) are compared in the following table to the theoretical values given by calculation.

Value of PF (in $mm^{-1.1}$)

| | Classical shape (4a) | Grooved shape (4b) |
| --- | --- | --- |
| Experimental average | 1.53 | 0.65 |
| Theoretical calculation | 1.47 | 0.60 |

The advantage of the grooved form as described in the invention is considerable because it results in a reduction in the pressure drop of the order of 58 percent.

2° Catalyst activity :

The tests are carried out in an isothermal reactor consisting of a tube of diameter 12 cm and containing 240 cc of catalyst; the temperatures are measured along the central axis of the catalyst bed, respectively at 1 cm above the upper surface of the catalyst bed and 1 cm below the lower surface.

A flow of gas is passed downwards through the catalyst bed at a pressure close to atmospheric pressure and with a flow of 950 normal litres per hour. The gas composition at the inlet to the reactor is as follows :

$$SO_2 \quad : \quad 6.5\%$$
$$O_2 \quad : \quad 11.9\%$$
$$N_2 \quad : \quad 81.6\%$$

The $SO_2$ concentration at the inlet and at the outlet of the reactor is measured and the conversion efficiency is calculated by the formula :

$$\text{Conversion (in percent )} = \frac{A - A'}{A - \dfrac{3AA'}{200}}$$

where A = % $SO_2$ at the reactor inlet

A'= % $SO_2$ at the reactor outlet.

The tests are carried out at different temperatures in the range 400°C to 450°C.

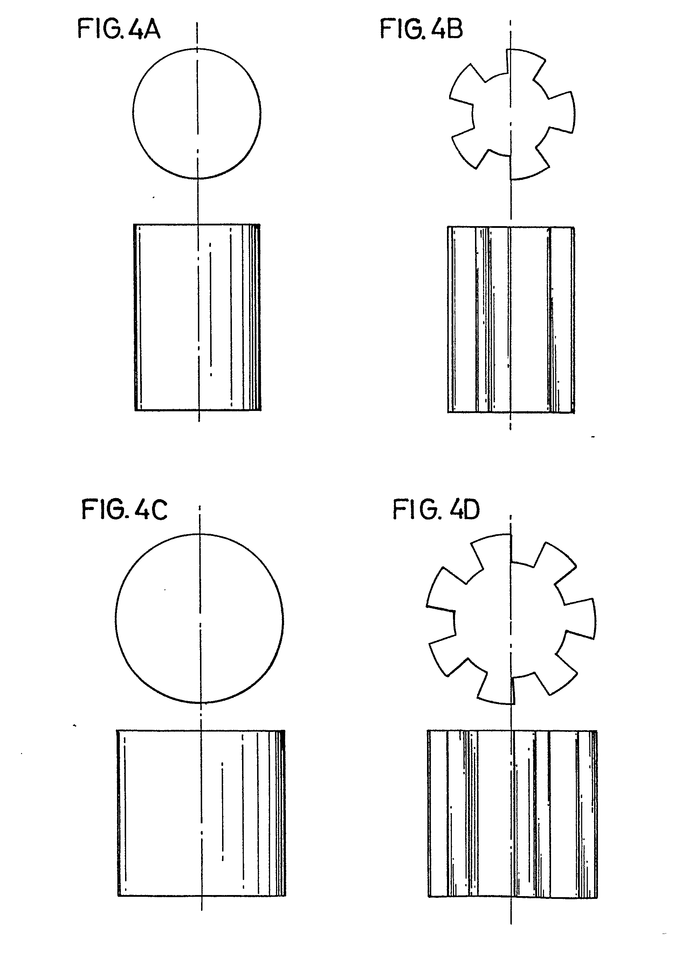

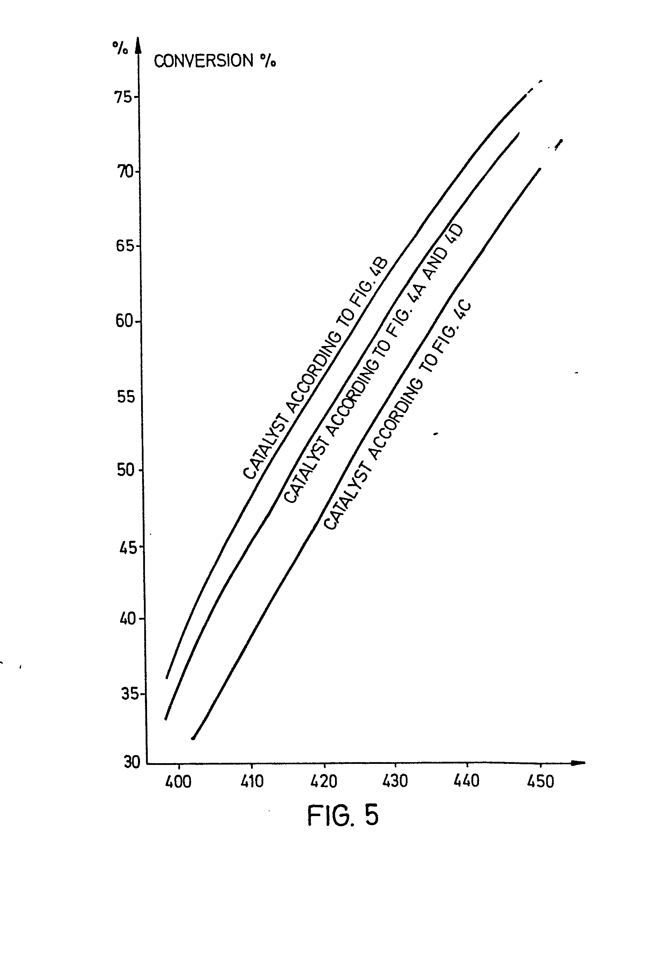

The results obtained for the two catalyst forms are shown graphically in figure 5. One can see that, in the temperature zone considered, the grooved catalyst particle as in Fig. 4(b) gives a conversion approximately 3% better than given by the classic catalyst particle as shown in Fig. 4(a). This is attributable to the greater gas/catalyst contact surface of the grooved catalyst.

Example 2.

One introduces successively into a mixer

- 10 Kg Kieselguhr

- 5 litres of an aqueous solution containing 100 gr KOH/litre

- 0.5 Kg of solid organic material and 0.5 Kg of liquid organic constituent.

After mixing for 1 hour, the material is formed in one case in the shape of cylinders of the classic type, and in the other case in the shape of grooved cylinders according to the shape described in the invention but having the same external dimensions as the classic cylinder.

The average dimensions of the catalyst particles according to Example 2 are given in Figures 4(c) and 4(d).

After drying for 2 hours at 150°C and calcining for 4 hours at 700°C, the catalyst particles are screened and then dipped in an aqueous solution, heated to 95°C and containing 200 gram/litre of $K_2CO_3$ and 120 gram/litre of $V_2O_5$.

The product is then dried for two hours at 250°C before being sulphided in an autoclave under pressure with $SO_2$.

As in Example 1, the two types of catalyst particle present the same characteristics of internal structure and chemical composition; only their geometric characteristics are different as shown in the following table :

| Type | Fig. 4c classic | Fig. 4d grooved |
|---|---|---|
| Average outside diam.mm | 8 | 8 |
| Average height mm | 8 | 8 |
| Contact surface ($cm^2$/litre) | 4698 | 5606 |
| % Void space, in a packed bed composed of the catalyst particles | 37 | 51 |

As in Example 1, the two forms of catalyst are compared from the point of view of pressure drop and from the point of view of activity.

1. _Pressure drop_.

The experimental results are obtained under the same test conditions as these in example 1. They compare as follows with the theoretical calculated results.

Value of PF (in $mm^{-1.1}$)

| | Classical form according to Fig. 4c | Grooved form according to Fig. 4d |
|---|---|---|
| Experimental measurement | 1.13 | 0.65 |
| Theoretical calculation | 1.22 | 0.58 |

Here again one can see that the grooved shape gives a substantial advantage since it gives a reduction in the pressure drop of 42% according to the tests and of 52% according to the theoretical calculations.

2. Catalyst activity.

The tests are carried out under the same conditions as those in Example 1. One can see that the classical shape as in Fig. 4C gives an efficiency of conversion approximately 5% lower than the grooved form as illustrated in Fig. 4d.

The two examples above show the advantage offered by the grooved shape according to the invention both from the point of view of pressure drop and from the point of view of activity. The superiority of the grooved form therefore presents the following advantages for an industrial installation :

- lower energy consumption due to the reduction in the pressure drop;

- reduction in investment cost because it is possible to construct smaller reactors with an increased ratio of height to diameter;

- possibility of prolonging the periods of production between each operation of catalyst screening, this results from the fact that the grooved form having a lower initial pressure drop, and a greater void fraction, a larger quantity of dust can be trapped before prohibitive pressure drops are reached. In addition, since the gas/catalyst contact surface is greater in the case of the grooved shape, dust will be trapped more rapidly in the top of the bed and will affect the overall performance of the catalyst beds to a lesser extent.

## CLAIMS.

1. A catalytic process for the transformation of $SO_2$ into $SO_3$, characterised by the fact that it uses catalysts based on $V_2O_5$ whose particles are grooved.

2. A catalyst containing $V_2O_5$ for the transformation of $SO_2$ into $SO_3$, characterised by the fact that it consists of solid or hollow cylindrical or prismatic particles whose longitudinal cylindrical or flat surfaces are furnished with grooves (1) whose spacing, depth and width are such that, if compared to a non-grooved cylinder or prim of identical height and external dimension, then the gas/solid surface is increased while still maintaining an adequate mechanical strength.

3. A catalyst as claimed in claim 2, whose particles are provided with grooves (1) sized in such a way as to prevent or to limit the penetration of catalyst particles into the grooves (1) of the other catalyst particles.

4. A catalyst as claimed in either one of claims 2 and 3, characterised by the fact that the grooves (1) are parallel to the axis of the prismatic or cylindrical particles of the catalyst.

5. A catalyst as claimed in any of claims 2 to 4, whose particles possess the following characteristics and dimensions :
- Form : solid cylinders provided with grooves (1) orientated in the axial plane; for preference the teeth (2) will have their side walls parallel and their corners will be sharp or slightly rounded.
- External diameter D : shall be comprised between 3 and 20 mm and for preference between 5.5 and 6.5 mm.

- Height H : the ratio H/D shall be comprised between 0.3 and 3.0 but for preference between 0.5 and 2.0.

- Number of grooves (1) N : N will be between 3 and 18, but for preference will be equal to 5,6 or 7.

- Outside width of the teeth (2) Ld : the ratio Ld/D shall be comprised between 0.05 and 0.5, and for preference between 0.21 and 0.30.

- Distance between two adjacent teeth (2) $L_c$: the ratio Lc/Ld shall be comprised between 0.3 and 1.05 and for preference between 0.8 and 1.05.

- Depth of grooves (1) P : the ratio P/D shall be comprised between 0.10 and 0.30 and for preference between 0.13 and 0.20.

6. A catalyst as claimed in any of claims 2 to 5, whose particles are in the form of cylindrical rings having grooves (1) in the outer lateral surface or the inner lateral surface or both outer and inner lateral surfaces, with outer diameter for preference between 6 and 20 mm.

7. A catalyst as claimed in any of claims 2 to 6, characterised by the fact that it contains from 2 to 12% of $V_2O_5$.

FIG. 1A

FIG. 1B

FIG. 2

FIG. 3

FIG. 4A

FIG. 4B

FIG. 4C

FIG. 4D

FIG. 5